# FASCICULE DE BREVET EUROPEEN

(11) **EP 1 076 048 B1**
(45) Date de publication et mention de la délivrance du brevet: **23.10.2002**
(21) Numéro de dépôt: 00402240.6
(22) Date de dépôt: 07.08.2000
(51) Int. Cl.: C04B 18/10, B09B 3/00

(54) **Procédé d'utilisation des lixiviats traités et dispositif utilisant ce procédé**
Verfahren zur Anwendung von behandelten Sickerwässern und Vorrichtung zur Durchfürung des Verfahrens
Process for using treated leachates and device for utilizing this process

(30) Priorité: 10.08.1999 FR 9910371
(43) Date de publication de la demande: 14.02.2001
(73) Titulaire: Yprema, 94437 Chennevieres sur Marne (FR)
(72) Inventeur: Basuyau, Vincent, 77590 Chartrette (FR)
(74) Mandataire: Schmit, Christian Norbert Marie

(56) Documents cités:
- EP-A- 0 362 125
- EP-A- 0 630 687
- WO-A-92/16317
- DE-A- 19 531 942
- FR-A- 2 473 036
- FR-A- 2 754 747
- US-A- 5 340 235

## Description

La présente invention a pour objet un procédé d'utilisation des lixiviats traités. Elle a également pour objet un dispositif utilisant ce procédé. Elle trouve plus particulièrement son utilisation dans le domaine du recyclage des déchets, notamment dans une valorisation des résidus, solides et ou liquides, produits par une incinération d'ordures ménagères. Un exemple préféré de valorisation de ces déchets selon l'invention est la formation de graves traitées aux liants hydrauliques. Un mâchefer est le résultat solide d'une incinération d'ordures ménagères. Du fait de leur extinction à l'eau et de leur exposition aux intempéries, les mâchefers contiennent une phase liquide à l'origine des lixiviats, résidus liquides qui apparaissent au cours du stockage, de la maturation ou du traitement des mâchefers. Mâchefers et lixiviats font l'objet de normes et réglementations gouvernementales sévères et strictes. En effet, ils contiennent de nombreux composants polluants, notamment des métaux lourds. L'intérêt de l'invention est qu'elle propose une valorisation de ces mâchefers et lixiviats ne nécessitant pas la réalisation d'une purification parfaite préalable de ces éléments.

Dans l'état de la technique, on connaît des plates-formes pour stocker des mâchefers. Ces plates-formes sont étanches, généralement situées en plein air. En effet, les mâchefers entreposés sur ces plates-formes sont polluants, ils doivent donc être mis à l'écart pour éviter une pollution des sols et des eaux souterraines. Un mâchefer entreposé sur une telle plate-forme y subit une maturation. La maturation consiste principalement en une stabilisation chimique sous l'action de l'air et de l'eau par décomposition des composants organiques, carbonatation et hydratation des sels minéraux et oxydes métalliques contenus dans ces mâchefers. Par ailleurs, cette plate-forme étant en plein air, le mâchefer reçoit des eaux météoritiques réalisant une lixiviation du mâchefer. En effet, l'hydratation de ce mâchefer entraîne la solubilisation de certains composants contenus dans le mâchefer. L'eau chargée en éléments solubles, ou en suspension tels que de la matière organique, de la matière minérale, des sels dissous ou encore des métaux lourds, forme le lixiviat.

Les lixiviats issus des mâchefers stockés sont recueillis dans des fossés étanches situés sur un pourtour de la plate-forme étanche. Les mâchefers solides restent sur la plate-forme. Ensuite, par le biais de canalisations étanches, ces lixiviats sont conduits dans un bassin de rétention lui-même étanche. Dans l'état de la technique, une utilisation connue des mâchefers est le mélange de ces mâchefers avec des liants hydrauliques. Le liant hydraulique, par exemple un ciment, permet l'obtention de graves hydrauliques. Par ailleurs, une utilisation connue des lixiviats est leur élimination, après réalisation d'une purification et d'une clarification parfaite. En effet, étant donné la composition physico-chimique des lixiviats, ils doivent être d'abord traités avant d'être rejetés dans un réseau d'assainissement commun.

Les normes environnementales vis à vis de la pollution des eaux usées sont très strictes. Il est donc impératif dans l'état de la technique d'effectuer une clarification parfaite de ces lixiviats. Un premier inconvénient est que cette clarification est longue et coûteuse. En effet, étant donné la pollution composite présente dans les lixiviats, il est nécessaire d'appliquer successivement plusieurs méthodes de traitement, éventuellement différentes. En l'occurrence, il est nécessaire d'exercer d'une part des méthodes pour éliminer des matières organiques solubles et en suspension et d'autre part des méthodes pour retenir des matières minérales tels que les sulfates et les chlorures. Et enfin il faut exercer des traitements pour éliminer les métaux lourds, tels que le plomb, le cuivre, ou le mercure. D'autre part, un deuxième inconvénient est que cette clarification des lixiviats est réalisée en pure perte. En effet, les lixiviats issus des mâchefers sont, même purifiés et clarifiés, destinés au rejet.

Par ailleurs, le procédé de traitement des lixiviats pose un troisième problème. En effet, l'évacuation des lixiviats traités, même après ces différents traitements fait l'objet de nombreux contrôles physico-chimiques. Ces contrôles physico-chimiques nécessitent des analyses fines et chères de manière à vérifier le respect continu des normes environnementales liées à l'évacuation de tels lixiviats.

L'invention a pour objet de remédier aux problèmes cités en proposant un procédé d'utilisation des lixiviats tel qu'une purification parfaite des lixiviats n'est pas nécessaire. En effet, selon l'invention, on traite les lixiviats avec une seule méthode de traitement, car tous les composants polluants ne doivent pas être nécessairement éliminés. Notamment, le traitement vis à vis des métaux lourds est inutile, car une utilisation prévue des lixiviats permet un piégeage de ces métaux lourds. En effet, dans un exemple préféré, on utilise les lixiviats traités comme une eau de gâchage d'un mélange de mâchefers et de liants hydrauliques. L'eau de gâchage est l'eau nécessaire pour que ce mélange prenne et permette la formation, par exemple, de graves.

Pour cela, après traitement dans une station de traitement on stocke les lixiviats traités dans un bassin intermédiaire. Puis on les incorpore dans une centrale de malaxage mélangeant les mâchefers et le liant hydraulique. Dans une telle utilisation, il est nécessaire que les lixiviats apportés comme eau de gâchage ne contiennent pas de composants pouvant empêcher la prise du liant hydraulique avec le mâchefer. Notamment les sels, en particulier les sels de chlorure, et les sulfates doivent être éliminés des lixiviats. Les métaux lourds et en général la matière organique résiduelle contenue dans ces lixiviats n'ont pas besoin d'être traités. En effet, ils seront piégés dans une structure formée lors de la cristallisation du mâchefer avec le liant hydraulique. Le traitement des lixiviats selon cette utilisation préférée de l'invention, est telle qu'elle ne nécessite pas de traitement coûteux. Par ailleurs, elle ne nécessite pas non plus de nombreuses analyses suite à ce traitement. En effet il a été montré que les composants polluants, tels que la matière organique ou les métaux lourds, contenus dans ces lixiviats font réellement l'objet d'un piégeage et ne sont pas libérés dans l'environnement, comme pour les mâchefers, lors de la formation de graves.

L'invention concerne donc un procédé d'utilisation des lixiviats issus d'un mâchefer, le mâchefer résultant de préférence d'une incinération d'ordures ménagères, dans lequel
- on stocke ce mâchefer sur une plate-forme, où il subit une maturation,
- on achemine un lixiviat brut produit par ce mâchefer sur cette plate-forme, par l'intermédiaire de fossés étanches, vers un bassin de rétention,
- on fait subir une oxygénation forcée au lixiviat brut dans ce bassin de rétention pour réduire la charge organique polluante ;
- on pompe le lixiviat ainsi aéré contenu dans le bassin de rétention pour l'amener vers une station de traitement,
- on traite le lixiviat aéré dans cette station de traitement,
caractérisé en ce que
- on stocke le lixiviat traité dans une citerne ou un bassin intermédiaire,
- on alimente une centrale de malaxage avec le lixiviat traité, un mâchefer et un liant hydraulique.

Dans l'état de la technique, un dispositif utilisant le procédé d'utilisation des mâchefers, est tel qu'il comporte une plate-forme étanche reliée par un réseau de canalisations étanches à un bassin de rétention lui-même relié à une station de traitement. Selon l'invention, le dispositif comporte un bassin intermédiaire ou une citerne pour y stocker des lixiviats traités issus de la station de traitement. Le bassin intermédiaire permet notamment d'alimenter un mélangeur permettant la formation de graves de mâchefer valorisé, traitées aux liants hydrauliques.

L'invention concerne également un dispositif utilisant des lixiviats traités comportant une plate-forme étanche pour stocker des mâchefers, un bassin de rétention pour recevoir des lixiviats bruts issus de la plate-forme par l'intermédiaire de fossés étanches, ce bassin de rétention étant relié à une station de traitement des lixiviats bruts par l'intermédiaire de canalisations étanches, caractérisé en ce qu'il comporte un bassin intermédiaire pour recevoir les lixiviats traités, à la sortie de la station de traitement, et en ce qu'il comporte une centrale de malaxage pour y mélanger un mâchefer, un liant hydraulique et les lixiviats traités.

L'invention sera mieux comprise à la lecture de la description qui suit et à l'examen des figures qui l'accompagne. Celles-ci ne sont présentées qu'à titre indicatif et nullement limitatif de l'invention. Les figures montrent :
- Figure 1 : un schéma représentant un dispositif permettant une utilisation des lixiviats selon l'invention ;
- Figure 2 : un logigramme présentant un procédé d'utilisation des lixiviats selon l'invention ;
- Figure 3 : une coupe d'un aérateur-agitateur utilisé selon l'invention.

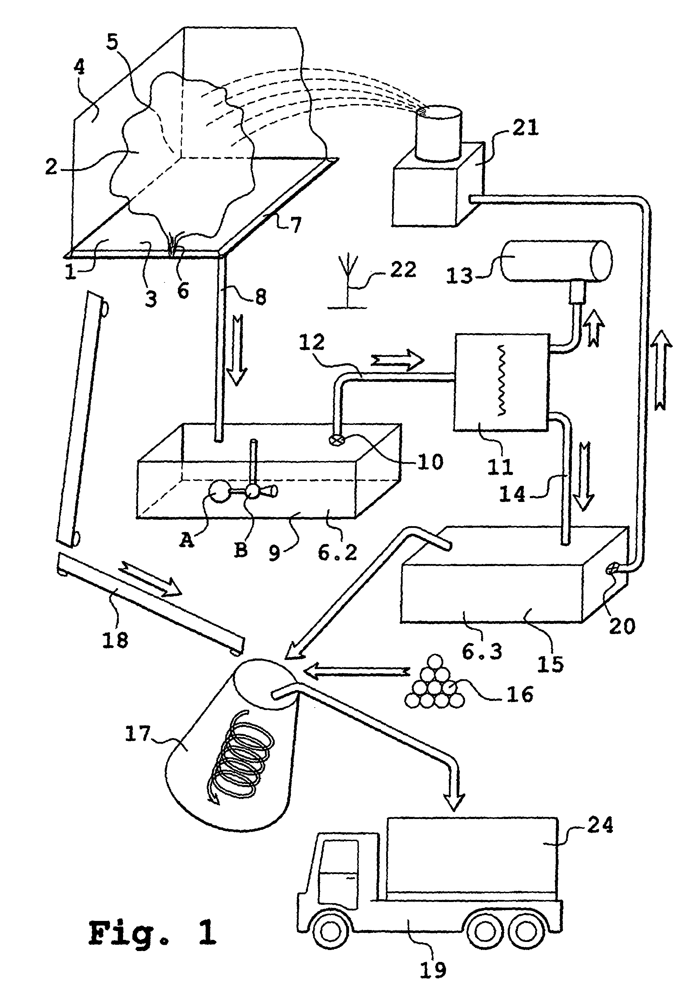

La figure 1 présente une plate-forme 1 permettant de stocker un mâchefer 2 selon l'invention. La plate-forme 1 est dans un exemple conçue de manière à ce qu'elle comporte un plancher 3 et une cloison 4. La cloison 4 est alors montée de manière étanche perpendiculairement au plancher 3. La plate-forme 1 est construite à l'air libre. Etant donné la nature des composants stockés, la plate-forme 1 est une structure parfaitement étanche de manière à ce que les éléments stockés, notamment les mâchefers, ne contribuent pas à la pollution des sols et des nappes phréatiques. La cloison 4 a préférentiellement dans cet exemple une forme en L permettant de former au moins un tas dans un creux 5 du L. Deux pans du L, formant la cloison 4, peuvent par exemple être orthogonaux. Cette cloison 4 est fixe et est préférentiellement du type CHAPSOL. Dans un exemple préféré de réalisation de cette plate-forme 1, le plancher 3 a une longueur de trente mètres et la cloison 4 a une hauteur de trois mètres.

Le mâchefer 2 est par exemple apporté sur la plate-forme 1 par l'intermédiaire de camions ou de convoyeur à bandes. Il est stocké sur cette plate-forme sous la forme de tas. Le mâchefer 2 résulte d'une incinération de déchets. Dans un exemple préféré de l'invention, les mâchefers 2 entreposés sur la plate-forme 1 résultent d'une incinération d'ordures ménagères. Ce type d'ordures confère alors aux mâchefers 2 des caractéristiques physico-chimiques particulières.

Le tas de mâchefers 2 est stocké sur la plate-forme 1 pendant un certain temps. Pendant ce temps de stockage, le mâchefer subit une maturation. Il s'agit notamment d'une maturation physico-chimique. D'une part, une partie de la matière organique contenue dans ces mâchefers se décompose. D'autre part, des sels minéraux et des oxydes métalliques également contenus dans ces mâchefers sont carbonatés et hydratés. En effet, ces mâchefers sont lessivés par des eaux météoritiques. Et généralement, en plus des eaux météoritiques, on arrose les stocks de mâchefer avec un réseau d'eau courante. L'eau traversant ces mâchefers aboutit à une lixiviation des différents composants solubles contenus dans les mâchefers. Un jus 6 découlant de ces mâchefers est appelé lixiviat. Il s'agit d'un lixiviat brut 6. Par ailleurs, les mâchefers étant entreposés à l'air libre, ils sont également soumis à une oxygénation par l'air ambiant.

Le plancher 3 de la plate-forme 1 est entouré sur un pourtour par des fossés 7. Les fossés 7 sont étanches. Les fossés 7 empêchent le lixiviat brut 6 de s'épandre de manière incontrôlée, et empêchent ainsi une pollution de l'environnement extérieur. Ces fossés 7 débouchent dans une canalisation étanche 8. Cette canalisation étanche 8 permet l'acheminement des lixiviats bruts 6 vers un bassin de rétention 9.

Ce bassin de rétention 9 est de préférence également situé à l'air libre. Il a une forme globalement parallélépipèdique. Le bassin de rétention 9 a un volume tel qu'il peut contenir une quantité représentant un orage décennal. Dans un exemple préféré de l'invention, le bassin de rétention 9 a un volume intérieur de 210 m³. Par ailleurs, les dimensions caractéristiques de ce bassin étanche 9 sont : une longueur de 20 mètres, une largeur de 15 mètres, et une hauteur de 0,9 mètres. En fait, la construction d'un tel bassin étanche prévoit une marge de sécurité vis à vis de la capacité volumique. La hauteur comporte dans cet exemple une marge de sécurité de 0,2 mètres. De plus, le bassin étanche 9 est équipé de détecteurs de remplissage permettant de surveiller en permanence le niveau de remplissage du bassin 9. Ainsi on évite tout débordement qui pourrait conduire à une pollution par les lixiviats bruts 6 de l'environnement extérieur.

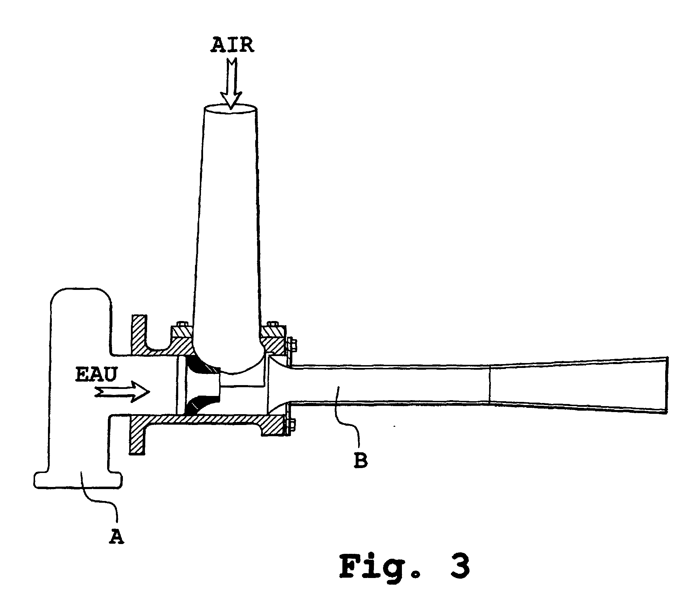

Dans le bassin de rétention 9, les lixiviats bruts 6 sont soumis à une oxygénation forcée. Ils y subissent un prétraitement les transformant en lixiviats aérés 6.2. En effet ils y sont stockés à l'air libre. D'autre part, le dispositif selon l'invention comporte une pompe A munie d'au moins un hydro-éjecteur B, présentés figure 3, permettant d'une part d'aérer et d'autre part d'agiter le liquide contenu dans le bassin. La pompe A est de préférence submersible et injecte dans chaque hydro-éjecteur une quantité de liquide, prélevé dans le bassin dans lequel la pompe est immergée. Cette quantité de liquide injectée est déterminée de manière à créer une dépression dans une cavité de l'hydro-éjecteur, et ainsi d'aspirer de l'air dans cette cavité par l'intermédiaire d'une pipe. La pipe d'admission d'air est montée verticalement sur la cavité, elle débouche au-dessus du niveau du bassin. L'hydro-éjecteur assure un mélange intime du liquide et de l'air ainsi pompé.

Cette aération et cette agitation permettent d'une part d'éviter un développement d'une activité bactérienne anaérobie responsable d'émissions malodorantes, et d'autre part d'éviter une sédimentation, voire une fermentation, d'une biomasse en suspension dans le bassin. Mais elles nécessitent l'adjonction d'un antimousse dans le bassin pour éviter que la mousse formée ne s'envole, et d'autre part nécessitent un curage régulier du bassin de rétention.

Une pompe 10 située sur une canalisation reliant le bassin de rétention 9 à une station de traitement 11 permet l'acheminement des lixiviats aérés 6.2 vers cette station de traitement 11. Cet acheminement se fait via des canalisations étanches 12. Les canalisations étanches 8 et 12 sont par exemple formées par une double enveloppe.

Dans la station de traitement 11, on effectue un traitement des lixiviats aérés 6.2. Etant donné l'utilisation prévue des lixiviats ainsi traités 6.3, dans l'exemple préféré, on cherche à éliminer essentiellement les sels de chlorure, les sulfates, et la charge polluante organique résiduelle dans les lixiviats aérés 6.2. Néanmoins d'autres types de traitements peuvent être proposés dans la station de traitement 11.

Dans une première variante, le traitement peut être par coagulation, floculation, puis décantation des lixiviats aérés 6.2. Le traitement nécessite alors l'utilisation de coagulants et de floculants spécifiques à la composition du lixiviat, et également spécifique au traitement recherché. Par cette méthode, on obtient une bonne élimination de la pollution dissoute organique, jusqu'à 60% de celle ci pour une eau provenant de Lagny. Mais aucune précipitation minérale n'est obtenue par ce traitement.

Dans une deuxième variante, le traitement peut être par adsorption sur charbon actif. Ce deuxième mode de traitement permet préférentiellement une élimination des matières organiques particulaires ou dissoutes, des micro-polluants et des métaux contenus dans les lixiviats aérés 6.2. Mais ce deuxième mode de traitement n'a aucun effet sur les sels minéraux.

Dans une troisième variante, le traitement peut être une électrophorèse ou une électrodialyse des lixiviats aérés 6.2. Ce troisième type de traitement nécessite l'utilisation de technologies de pointe qui permettent une déminéralisation efficace. Ce traitement nécessite l'utilisation de consommables chers, tels que des électrodes.

Dans une quatrième variante, le traitement peut être par évaporation et incinération des lixiviats aérés 6.2. Ce quatrième type de traitement est notamment efficace pour traiter de petites quantités. Etant donné l'utilisation recherchée, les possibilités offertes par ce quatrième traitement ne seront pas envisagées dans une application industrielle globale. En effet, cette variante aboutit à une destruction des lixiviats 6. Cependant, elle pourra être utilisée pour traiter de petites quantités résiduelles issues de ces lixiviats aérés 6.2.

Dans une cinquième variante, préférée -pour l'utilisation visée, le traitement est la filtration sur membrane. Il s'agit de préférence de membranes semi-perméables. Etant donné le type de composants à filtrer dans les lixiviats aérés 6.2, les membranes choisies sont telles qu'elles permettent une filtration de l'ordre de 0.0001 micromètres à 0.002 micromètres. Ainsi on peut obtenir une déconcentration en sels en réalisant une filtration par osmose inverse ou nanofiltration. Un exemple préféré de l'invention nécessite la mise en oeuvre d'une filtration par osmose inverse mono-étagée. Dans cet exemple, une seule membrane permettant la filtration, et d'autre part que cette filtration est réalisée en une seule étape.

Dans une sixième variante, le traitement est une évaporation condensation des lixiviats aérés 6.2. Ce sixième traitement nécessite la mise en oeuvre d'une chaudière, d'un compresseur et une chambre pour y évaporer, puis condenser, les lixiviats aérés 6.2. Par ce traitement, on obtient un condensât et un concentrât. Le concentrât, riche en sels de chlorure, est à éliminer, et le condensât déconcentré en sels de chlorure est à réutiliser selon le procédé de l'invention.

Dans un exemple préféré de l'invention, la station de traitement, est conçue avec un dispositif de filtration, et est prévue pour avoir un débit de l'ordre de 1 m³ /heure. Par ailleurs cette station de traitement est prévue pour fonctionner 20 heures par jour. Dans cet exemple, la station de traitement a un débit de l'ordre de 20 m³ par jour. Suite à ce traitement, environ 80% du lixiviat aéré 6.2 est transformé sous forme d'eau clarifiée et épurée, appelée également perméat ou lixiviat traité 6.3. Les 20% résiduels du lixiviat aéré 6.2 forment un concentrât et regroupent la charge polluante extraite par le traitement.

Figure 1, le concentrât peut par exemple être évacué dans une citerne 13 connectée à la station de traitement 11. La citerne 13 fera ensuite l'objet d'un traitement particulier dans une installation agréée. Notamment, il peut être prévu de réaliser sur ce concentrât un traitement du type évaporation-incinération.

Par ailleurs, le lixiviat traité 6.3 est conduit par une canalisation 14 dans un bassin intermédiaire 15, ou une citerne (non représentée). Ce bassin intermédiaire 15 dans un exemple préféré de l'invention a un volume de l'ordre de 150 m³. Il est prévu pour stocker jusqu'à cinq jours d'eau clarifiée et épurée produite par la station de traitement 11. Par exemple, le bassin intermédiaire a une forme parallélépipèdique, telle qu'une longueur est égale à 20 mètres, une largeur à 15 mètres et une hauteur à 0.7 mètres. Une marge de sécurité vis à vis du volume de remplissage est prise, la hauteur est surélevée de 0.2 mètres, pour pouvoir garantir un non-débordement de ce bassin intermédiaire 15.

Les lixiviats traités 6.3 contenus dans ce bassin intermédiaire 15 contiennent peu de sels, notamment peu de sels de chlorure. Par contre, la teneur résiduelle en métaux lourds reste en dehors des normes réglementaires. Donc le bassin intermédiaire 15 doit également être étanche. En effet, la station de traitement 11 ne réalise pas une purification parfaite du lixiviat aéré 6.2.

Le lixiviat traité 6.3 contenu dans le bassin intermédiaire 15 peut avoir plusieurs utilisations. Une utilisation préférée de ce lixiviat traité 6.3 est dans un mélange avec des mâchefers, par exemple issus de la plate-forme 1, et de liants hydrauliques 16. Ce mélange a lieu dans une centrale de malaxage 17. Cette centrale de malaxage 17 est équipée d'un malaxeur à deux arbres horizontaux. Le malaxeur assure l'homogénéisation du mélange.

Un convoyeur 18 amène par exemple des mâchefers en fin de maturation, depuis la plate-forme 1 vers la centrale de malaxage 17. Par ailleurs le liant hydraulique 16 est apporté sous forme sèche, voire pulvérulente, dans un silo de cette centrale de malaxage 17.

Le lixiviat traité 6.3 apporté dans cette centrale de malaxage 17 joue un rôle d'eau de gâchage. En effet, il assure le mouillage du liant hydraulique 16 et des mâchefers 2, nécessaire à la prise hydraulique du mélange. L'intérêt de l'invention est que les métaux lourds contenus dans le lixiviat traité 6.3 vont être piégés dans le mélange du mâchefer 2 avec le liant hydraulique 16. Un deuxième intérêt de l'invention est qu'elle permet d'économiser l'eau utilisée dans la centrale de malaxage, car celle-ci utilise les lixiviats traités 6.3.

Le liant hydraulique 16 est, dans un exemple préféré, de l'invention un ciment. Il existe différents types de ciments à mélanger avec les mâchefers 2. On choisit la nature du ciment en fonction des caractéristiques physico-chimiques des mâchefers du type désiré de graves formées par ce mélange.

Lorsque le mouillage et le malaxage du mâchefer avec le liant hydraulique 16 ont eu lieu, la centrale de malaxage 17 déverse son contenu dans une benne 24 d'un camion 19. Le camion 19 permet alors un transport de ce mélange encore non solidifié vers une zone d'utilisation, où la prise définitive du mélange aura lieu. Une zone d'utilisation est dans un exemple préféré un chantier de construction d'ouvrages routiers ou de génie civil.

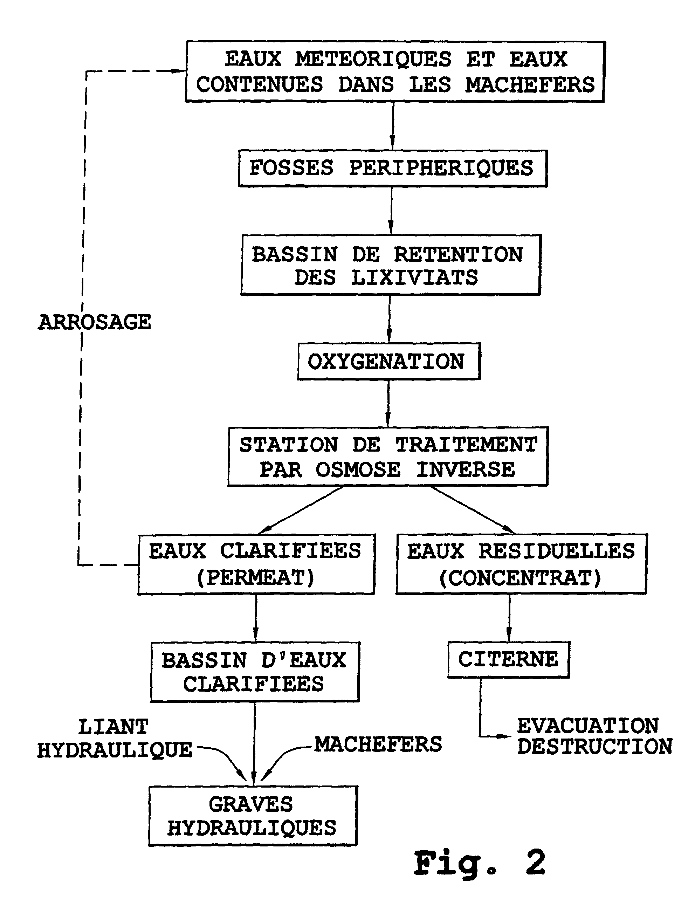

Comme présenté figure 2, une autre utilisation des lixiviats traités 6.3 peut être l'arrosage. En effet, figure 1, une pompe permet de drainer les lixiviats traités 6.3 depuis le bassin intermédiaire 15 vers un canon d'aspersion 21. Dans une variante, on peut prévoir plusieurs canons d'aspersion tels que le canon 21. Ce canon d'aspersion 21 est disposé en vis à vis de la plate-forme 1, à une hauteur maximale de 2 mètres. Dans ce cas, l'eau des lixiviats traités 6.3 intervient dans la maturation des mâchefers, pour ensuite retourner dans le bassin de rétention 9 avec les lixiviats bruts 6.

Dans une variante de l'invention, on peut utiliser les lixiviats traités 6.3 contenus dans le bassin intermédiaire 15 pour nettoyer le matériel ou les pistes entourant le dispositif selon l'invention.

Par ailleurs le dispositif selon l'invention comporte un moyen de contrôle 22, par exemple un piézomètre. Ce piézomètre 22 est disposé de préférence entre les fossés étanches 7 et la station de traitement 11. Le piézomètre 22 est un dispositif permettant de prélever des échantillons d'eaux d'une nappe souterraine du dispositif. Il permet ainsi de contrôler régulièrement la non-pollution de l'environnement extérieur.

## Revendications

1. Procédé d'utilisation des lixiviats (6) issus d'un mâchefer (2), le mâchefer résultant de préférence d'une incinération d'ordures ménagères, dans lequel
- on stocke ce mâchefer sur une plate-forme (1), où il subit une maturation,
- on achemine un lixiviat brut (6) produit par ce mâchefer sur cette plate-forme, par l'intermédiaire de fossés étanches (7), vers un bassin de rétention (9),
- on fait subir une oxygénation forcée au lixiviat brut dans ce bassin de rétention pour réduire la charge organique polluante ;
- on pompe le lixiviat ainsi aéré (6.2) contenu dans le bassin de rétention pour l'amener vers une station de traitement (11),
- on traite le lixiviat aéré dans cette station de traitement,
**caractérisé en ce que**
- on stocke le lixiviat traité (6.3) dans une citerne ou un bassin intermédiaire (15),
- on alimente une centrale de malaxage (17) avec le lixiviat traité, un mâchefer et un liant hydraulique (16).

2. Procédé selon la revendication 1 **caractérisé en ce que**
- on réalise un traitement du lixiviat brut par osmose inverse mono-étagée dans la station de traitement.

3. Procédé selon l'une des revendications 1 à 2 **caractérisé en ce que**
- on effectue un traitement du lixiviat brut par évaporation et condensation dans la station de traitement.

4. Procédé selon l'une des revendications 1 à 3 **caractérisé en ce que**
- on réalise une oxygénation forcée du lixiviat brut du bassin de rétention avec des aérateurs, de préférence avec une pompe (A) reliée à au moins un hydro-éjecteur (B).

5. Procédé selon l'une des revendications 1 à 4 **caractérisé en ce que**
- on asperge avec les lixiviats traités du bassin intermédiaire le mâchefer stocké sur la plate-forme grâce à des canons d'aspersion (21).

6. Procédé selon l'une des revendications 1 à 5 **caractérisé en ce que**
- on évacue un concentrât résultant du traitement du lixiviat brut dans un réseau spécialisé.

7. Dispositif utilisant des lixiviats traités comportant une plate-forme (1) étanche pour stocker des mâchefers (2), un bassin de rétention (9) pour recevoir des lixiviats bruts issus de la plate-forme par l'intermédiaire de fossés étanches (7), ce bassin de rétention étant relié à une station de traitement (11) des lixiviats par l'intermédiaire de canalisations étanches (8, 12), **caractérisé en ce qu'**il comporte un bassin intermédiaire (15) pour recevoir les lixiviats traités (6.3), à la sortie de la station de traitement, et **en ce qu'**il comporte une centrale de malaxage (17) pour y mélanger un mâchefer, un liant hydraulique (16) et les lixiviats traités.

8. Dispositif selon la revendication 7 **caractérisé en ce qu'**il comporte un canon d'aspersion (21) relié par une pompe (20) au bassin intermédiaire, et orienté pour arroser la plate-forme.

9. Dispositif selon l'une des revendications 7 à 8 **caractérisé en ce qu'**il comporte une citerne (13) reliée à la station de traitement, pour évacuer un concentrât issu du traitement des lixiviats bruts.

10. Dispositif selon l'une des revendications 7 à 9 **caractérisé en ce qu'**il comporte un dispositif de contrôle, de préférence un piézomètre (22) disposé entre les fossés étanches et la station de traitement.

11. Dispositif selon l'une des revendications 1 à 10 **caractérisé en ce que** la station de traitement comporte un système de filtration par osmose inverse mono-étagée.

12. Dispositif selon l'une des revendications 1 à 11 **caractérisé en ce qu'**il comporte un aérateur et un agitateur dans le bassin de rétention, de préférence une pompe (A) reliée à un hydro-éjecteur (B).

## Claims

1. A process for utilising leachates (6) coming from clinker (2), this clinker preferably resulting from the incineration of domestic waste, in which
- the clinker is stored on a platform (1), where it matures;
- the raw leachate (6) produced by the clinker on the platform is directed via watertight channels (7) to a holding tank (9);
- the raw leachate in the holding tank is subjected to forced oxygenation in order to reduce its organic pollutant content;
- the leachate thus aerated (6.2) contained in the holding tank is pumped to a treatment station (11);
- the aerated leachate is treated in the treatment station:
**characterised in that**
- the treated leachate (6.3) is stored in an intermediate tank or pond (15);
- the treated leachate, clinker and a hydraulic binder (16) are fed into a mixing unit (17).

2. A process according to Claim 1, **characterised in that**
- the raw leachate is treated by single-stage reverse osmosis in the treatment station.

3. A process according to Claim 1 or Claim 2, **characterised in that**
- the raw leachate is treated by evaporation and condensation in the treatment station.

4. A process according to one of Claims 1 to 3, **characterised in that**
- forced oxygenation is applied to the raw leachate in the holding tank, preferably with a pump (A) connected to at least one hydroejector (B).

5. A process according to one of Claims 1 to 4, **characterised in that**
- spray canons (21) are used to spray the treated leachates from the intermediate tank onto the clinker stored on the platform.

6. A process according to one of Claims 1 to 5, **characterised in that**
- the concentrate resulting from treatment of the raw leachate is removed into a special network.

7. A device using treated leachates comprising a watertight platform (1) for storing clinker (2), a holding tank (9) to receive raw leachates from the platform via watertight channels (7), this holding tank being connected to a treatment station via watertight pipes (8, 12), **characterised in that** it has a mixing unit (17) where clinker, a hydraulic binder and treated leachates are mixed.

8. A device according to Claim 7, **characterised in that** it incorporates a spray canon (21) connected by a pump (20) to the intermediate tank and oriented so that it sprays the platform.

9. A device according to one of Claims 7 to 8, **characterised in that** it incorporates a tank (13) connected to the treatment station to remove a concentrate coming from the raw leachate treatment station.

10. A device according to one of Claims 7 to 9, **characterised in that** it incorporates a control device, preferably a piezometer (22) positioned between the watertight channels and the treatment station.

11. A device according to one of Claims 1 to 10, **characterised in that** the treatment station incorporates a single-stage reverse osmosis filtration system.

12. A device according to one of Claims 1 to 11, **characterised in that** it incorporates an aerator and an agitator in the holding tank, preferably a pump (A) connected to a hydroejector (B).

## Patentansprüche

1. Verfahren zur Verwendung des aus einer Brennstoffschlacke (2) stammenden Müllsickerwassers (6), wobei die Brennstoffschlacke vorzugsweise aus einer Verbrennung von Haushaltsabfällen stammt, bei dem
- diese Brennstoffschlacke auf einer Plattform (1) gelagert wird, wo sie einer Reifung unterzogen wird,
- ein unbehandeltes Müllsickerwasser (6), das von dieser Brennstoffschlacke auf dieser Plattform erzeugt wurde, über dichte Gräben (7) zu einem Auffangbecken (9) geleitet wird,
- das unbehandelte Müllsickerwasser in diesem Auffangbecken einer Zwangsoxidierung unterzogen wird, um die organische Schmutzfracht zu verringern,
- das im Auffangbecken enthaltene, so belüftete Müllsickerwasser (6.2) gepumpt wird, um es zu einer Aufbereitungsanlage (11) zu bringen,
- das belüftete Müllsickerwasser in dieser Aufbereitungsanlage behandelt wird,
**dadurch gekennzeichnet, daß**
- das behandelte Müllsickerwasser (6.3) in einer Zisterne oder einem Zwischenbecken (15) gelagert wird,
- ein Mischwerk (17) mit dem behandelten Müllsickerwasser, einer Brennstoffschlacke und einem hydraulischen Bindemittel (16) gespeist wird.

2. Verfahren nach Anspruch 1, **dadurch gekennzeichnet, daß** das unbehandelte Müllsickerwasser in der Aufbereitungsanlage durch umgekehrte einstufige Osmose behandelt wird.

3. Verfahren nach einem der Ansprüche 1 bis 2, **dadurch gekennzeichnet, daß** das unbehandelte Müllsickerwasser in der Aufbereitungsanlage einer Behandlung durch Verdunsten und Kondensieren unterzogen wird.

4. Verfahren nach einem der Ansprüche 1 bis 3, **dadurch gekennzeichnet, daß** eine Zwangsoxidierung des unbehandelten Müllsickerwassers des Auffangbeckens durch Belüfter, vorzugsweise mit einer Pumpe (A), die mit mindestens einer Wasserstrahlpumpe (B) in Verbindung steht, durchgeführt wird.

5. Verfahren nach einem der Ansprüche 1 bis 4, **dadurch gekennzeichnet, daß** die auf der Plattform gelagerte Brennstoffschlacke mit Hilfe von Sprühstrahlrohren (21) mit dem behandelten Müllsickerwasser des Zwischenbeckens besprüht wird.

6. Verfahren nach einem der Ansprüche 1 bis 5, **dadurch gekennzeichnet, daß** ein von der Behandlung des unbehandelten Müllsickerwassers stammendes Konzentrat in ein zugeordnetes Netz abgeführt wird.

7. Vorrichtung, die behandeltes Müllsickerwasser verwendet, mit einer dichten Plattform (1) zum Lagern von Brennstoffschlacken (2), einem Auffangbecken (9) zur Aufnahme des von der Plattform kommenden, unbehandelten Müllsickerwassers über dichte Gräben (7), wobei dieses Auffangbecken über dichte Rohrleitungen (8, 12) mit einer Aufbereitungsanlage (11) für das Müllsickerwasser verbunden ist, **dadurch gekennzeichnet, daß** sie ein Zwischenbecken (15) zur Aufnahme des behandelten Müllsickerwassers (6.3) am Ausgang der Aufbereitungsanlage aufweist, und daß sie ein Mischwerk (17) enthält, um darin eine Brennstoffschlacke, ein hydraulisches Bindemittel (16) und das behandelte Müllsickerwasser zu mischen.

8. Vorrichtung nach Anspruch 7, **dadurch gekennzeichnet, daß** sie ein Sprühstrahlrohr (21) aufweist, das über eine Pumpe (20) mit dem Zwischenbecken verbunden und ausgerichtet ist, um die Plattform zu besprühen.

9. Vorrichtung nach einem der Ansprüche 7 bis 8, **dadurch gekennzeichnet, daß** sie eine Zisterne (13) aufweist, die mit der Aufbereitungsanlage verbunden ist, um ein von der Behandlung des unbehandelten Müllsickerwassers stammendes Konzentrat zu evakuieren.

10. Vorrichtung nach einem der Ansprüche 7 bis 9, **dadurch gekennzeichnet, daß** sie eine Kontrollvorrichtung, vorzugsweise ein Piezometer (22), aufweist, die zwischen den dichten Gräben und der Aufbereitungsanlage angeordnet ist.

11. Vorrichtung nach einem der Ansprüche 1 bis 10, **dadurch gekennzeichnet, daß** die Aufbereitungsanlage ein System zur Filterung durch umgekehrte einstufige Osmose aufweist.

12. Vorrichtung nach einem der Ansprüche 1 bis 11, **dadurch gekennzeichnet, daß** sie im Auffangbecken einen Belüfter und ein Rührwerk aufweist, vorzugsweise eine mit einer Wasserstrahlpumpe (B) verbundene Pumpe (A).
